# EUROPÄISCHE PATENTSCHRIFT

(11) **EP 2 459 342 B1**
(45) Veröffentlichungstag und Bekanntmachung des Hinweises auf die Patenterteilung: **11.12.2013**
(21) Anmeldenummer: 10724278.6
(22) Anmeldetag: 19.05.2010
(51) Int. Cl.: B23Q 7/14

(54) **MASCHINELLE WERKSTÜCKBEARBEITUNGSANLAGE UND PALETTEN-AUFLAGE FÜR EINE MASCHINELLE WERKSTÜCKBEARBEITUNGSANLAGE**
WORKPIECE PROCESSING MACHINE AND PALLET SUPPORT FOR A WORKPIECE PROCESSING MACHINE
INSTALLATION MÉCANISÉE DE TRAITEMENT DE PIÈCES ET SUPPORT DE PALETTE POUR UNE INSTALLATION MÉCANISÉE DE TRAITEMENT DE PIÈCES

(30) Priorität: 31.07.2009 DE 102009035804
(43) Veröffentlichungstag der Anmeldung: 06.06.2012
(73) Patentinhaber: TRUMPF Werkzeugmaschinen GmbH + Co. KG, 71254 Ditzingen (DE)
(72) Erfinder: KETTNER-REICH, Andreas, 70469 Stuttgart (DE); MECK, Tobias, 70329 Stuttgart (DE); PETERA, Martin, 70499 Stuttgart (DE)
(74) Vertreter: Schmitt, Martin
(86) Internationale Anmeldenummer: PCT/EP2010/003056
(87) Internationale Veröffentlichungsnummer: WO 2011/012183

(56) Entgegenhaltungen:
- EP-A1- 0 391 707
- DE-A1-102006 002 000
- US-A- 4 664 579
- US-B1- 6 183 188

## Beschreibung

Die Erfindung betrifft eine maschinelle Werkstückbearbeitungsanlage, insbesondere Laserbearbeitungsanlage, welche einen Arbeitsbereich aufweist, innerhalb dessen ein auf einer Arbeitspalette gelagertes Werkstück bearbeitbar ist, wobei die Arbeitspalette in einer Transportrichtung von einer Position innerhalb des Arbeitsbereiches in eine Position außerhalb des Arbeitsbereiches und/oder entgegengesetzt transportierbar ist, und wobei eine Paletten-Auflage vorgesehen ist, welche eine Lagerfläche zur Lagerung der Arbeitspalette definiert, wobei die von der Paletten-Auflage definierte Lagerfläche in einer Lagerstellung der Paletten-Auflage außerhalb des Arbeitsbereiches angeordnet ist und wobei die Paletten-Auflage in eine zweite Stellung überführbar ist, in welcher die Paletten-Auflage in Transportrichtung weniger weit gegenüber dem Arbeitsbereich vorsteht als in der Lagerstellung.

Insbesondere bei der Laserbearbeitung von Werkstücken muss der Arbeitsbereich einer maschinellen Werkstückbearbeitungsanlage aus Sicherheitsgründen beispielsweise von einem Strahlenschutzgehäuse umgeben sein. Aufgrund der erforderlichen Kapselung des Arbeitsbereiches der Laserbearbeitungsanlage ist dieser z. B. zum Beschicken der Anlage mit Werkstücken schlecht zugänglich.

Die US 5,156,254 beschreibt eine maschinelle Anlage der eingangs genannten Art. Im Stand der Technik wird ein Werkstück für die Bearbeitung auf einer Arbeitspalette bzw. Werkstückauflage angeordnet, die mitsamt dem auf ihr lagernden Werkstück in den Arbeitsbereich einer Bearbeitungsmaschine transportiert werden kann. Nach der Werkstückbearbeitung kann die Arbeitspalette gemeinsam mit dem bearbeiteten Werkstück wieder aus dem Arbeitsbereich transportiert werden. Die außerhalb des Arbeitsbereiches angeordnete Arbeitspalette ist z. B. zur Anbindung an eine Palettenwechseleinrichtung leichter zugänglich.

Zur Lagerung der aus dem Arbeitsbereich transportierten Arbeitspalette dient im Stand der Technik ein mit Führungsschienen versehener Lagerrahmen. Insgesamt benötigt die Bearbeitungsanlage des Standes der Technik zusätzlich zum Arbeitsbereich eine relativ große Stellfläche.

Gattungsgemäßer Stand der Technik ist offenbart in EP 0 391 707 A1. Diese Druckschrift offenbart eine maschinelle Anordnung mit einem Arbeitsbereich sowie mit einer Beschickungsvorrichtung, die dazu dient, dem Arbeitsbereich Teile zuzuführen. Die Beschickungsvorrichtung umfasst zwei Beschickungseinheiten die jeweils einen schienengeführten Transporttisch aufweisen. Die Transporttische lagern an ihrer Oberseite die Teile, welche zu dem Arbeitsbereich der maschinellen Anordnung zu transferieren sind und definieren dementsprechend eine Lagerfläche für die zu transportierenden Teile. Um dem Arbeitsbereich Teile zuzuführen werden die mit den Teilen beladenen Transporttische jeweils aus einem Rückzugsbereich in Richtung auf den Arbeitsbereich bewegt. Die flächige Erstreckung der Transporttische und somit die Größe der von den Transporttischen jeweils definierten Lagerfläche für zu transferierende Teile bleibt dabei unverändert. Entsprechend groß dimensioniert ist der dem Arbeitsbereich der maschinellen Anordnung vorgelagerte Bewegungsbereich, innerhalb dessen die Transporttische zwischen dem Rückzugsbereich und einer arbeitsbereichsnahen Stellung verfahren und der folglich für die Transporttische bereitzustellen ist. Die Beschickungseinheiten für die Transporttische sind jeweils auf einer unbeweglichen Grundplatte angeordnet, so dass sich bei einer Bewegung der Transporttische der durch die gesamte Baugrupppe eingenommene Raum nicht verändert.

Ausgehend von dem Stand der Technik hat sich die Erfindung zum Ziel gesetzt, eine maschinelle Anlage derart weiterzuentwickeln, dass sich eine maschinelle Anlage ergibt, die sich durch einen niedrigen Platzbedarf auszeichnet.

Erfindungsgemäß gelöst wird die Aufgabe durch die maschinelle Werkstückbearbeitungsanlage nach Anspruch 1.

Im Sinne der Erfindung ist die Paletten-Auflage ausgehend von der Lagerstellung in eine zweite Stellung überführbar, in welcher die Paletten-Auflage in Transportrichtung weniger weit gegenüber dem Arbeitsbereich vorsteht als in der Lagerstellung. Dies wird ermöglicht, indem wenigstens ein Teil der Paletten-Auflage unter Verkleinerung, eventuell sogar unter Wegfall, der durch die Paletten-Auflage definierten Lagerfläche auf den Arbeitsbereich zu bewegbar ist.

Erfindungsgemäß ist die Paletten-Auflage nicht unbeweglich neben einem Arbeitsbereich einer maschinellen Werkstückbearbeitungsanlage installiert, sondern wenigstens teilweise gegenüber dem Arbeitsbereich relativbeweglich. Die Relativbeweglichkeit der Paletten-Auflage ist dabei derart ausgestaltet, dass sich die Paletten-Auflage platzsparend in Richtung des Arbeitsbereiches zusammenschieben, -schwenken, -klappen oder dergleichen lässt.

Die Lagerung der relativbeweglichen Teile der Paletten-Auflage kann in konstruktiver Hinsicht unterschiedlich ausgestaltet sein. Beispielsweise kann die Paletten-Auflage zu diesem Zweck teleskopierbare Profile oder Knickarme usw. aufweisen.

Die Erfindung zeichnet sich außerdem durch den Vorteil aus, dass die Paletten-Auflage in der platzsparenden, zweiten Stellung in der Nähe des Arbeitsbereiches angeordnet ist, da die Paletten-Auflage zum Überführen in die zweite Stellung auf den Arbeitsbereich zu bewegt wird. Sobald sie wieder benötigt wird, ist sie daher schnell verfügbar.

Durch eine einfache Nachrüstbarkeit zeichnet sich ein Aufbau der Paletten-Auflage aus, welcher weitgehend unabhängig von anderen Einrichtungen der Bearbeitungsanlage ist und separat installierbar ist.

Vorteilhafte Ausführungsarten der maschinellen Werkstückbearbeitungsanlage nach Anspruch 1 ergeben sich aus den Ansprüchen 2 bis 12.

Im Falle einer Bauart der Erfindung nach Anspruch 2 weist die Paletten-Auflage wenigstens eine Lagerung auf, welche den zum Überführen der Paletten-Auflage in unterschiedliche Stellungen bewegten Teil der Paletten-Auflage beweglich lagert. Der bewegte Teil ist folglich bei einer Überführungsbewegung der Paletten-Auflage wenigstens durch das Lager geführt. Aufgrund der geführten Überführungsbewegung ergibt sich eine einfache und funktionssichere Handhabung der Paletten-Auflage.

Bei einer besonders kompakten Variante der Erfindung nach Anspruch 3 ist die Paletten-Auflage wenigstens teilweise schwenkbar, um von der Lagerstellung in die zweite Stellung überführt zu werden. Aufwändige Linearlager, wie z. B. teleskopierbare Tragarme, sind somit vermeidbar.

Bei einer Bauart, bei welcher die Paletten-Auflage zumindest teilweise um eine vertikale Schwenkachse schwenkbar ist, ergeben sich im Hinblick auf die für die Überführungsbewegung benötigen Kräfte Vorteile. Aufgrund des vertikalen Verlaufs der Schwenkachse erfolgt die Überführungsbewegung in horizontaler Richtung. Weder bei der Überführungsbewegung ausgehend von der Lagerstellung in die zweite Stellung noch bei der Überführungsbewegung zurück müssen die bewegten Teile der Paletten-Auflage anhoben werden. Zudem kann der bewegte Teil der Paletten-Auflage bei einer horizontalen Überführungsbewegung in einfacher Weise, z. B. über Rollen, ständig am Boden abgestützt werden.

Gemäß Anspruch 4 weist die Paletten-Auflage wenigstens ein Tragprofil auf, dessen Längsachse in der Lagerstellung der Paletten-Auflage entlang der Transportrichtung verläuft. Durch Verwendung wenigstens eines Tragprofils ergibt sich eine stabile und leichte Konstruktion der Paletten-Auflage. Indem wenigstens ein Ende des Tragprofils, welches bei der Lagerstellung der Paletten-Auflage arbeitsbereichsfern angeordnet ist, auf den Arbeitsbereich zu bewegbar ist, wird der Platzbedarf der Paletten-Auflage besonders effizient durch die Überführungsbewegung in die zweite Stellung reduziert.

Eine alternative Bauart der Erfindung nach Anspruch 5 mit wenigstens zwei Tragprofilen zeichnet sich durch die vorstehend genannten Vorteile einer Profilkonstruktion aus. Außerdem ergibt sich eine besonders angenehme und flexible Handhabung der Paletten-Auflage, wenn die Tragprofile unabhängig voneinander und somit einzeln nacheinander um verschiedene Schwenkachsen schwenkbar sind.

Nach Anspruch 6 verläuft die Längsachse wenigstens eines Tragprofils der Paletten-Auflage in der zweiten Stellung der Paletten-Auflage weitgehend quer zur Transportrichtung. Die Platzreduktion durch das Überführen der Paletten-Auflage in die zweite Stellung ist bei dieser Erfindungsvariante besonders groß. Durch einen entsprechenden Vorteil zeichnet sich die Ausführungsart der Erfindung gemäß Anspruch 7 aus, bei welcher sich die Tragprofile der Paletten-Auflage in der zweiten Stellung der Paletten-Auflage quer zur Transportrichtung wenigstens teilweise gegenseitig überdecken. Des Weiteren ergibt sich eine zusammenklappbare Paletten-Auflage, welche relativ lange Tragprofile aufweisen kann, die trotzdem gemeinsam an einer Seite des Arbeitsbereiches angeordnet werden können.

Ein funktionssicherer Transport der Arbeitspalette aus dem Arbeitsbereich ist nach Anspruch 8 sichergestellt, indem die Arbeitspalette bei der Transportbewegung wenigstens teilweise auf der Paletten-Auflage lagert. Darüber hinaus entfällt die Notwendigkeit neben der Paletten-Auflage außerhalb des Arbeitsbereiches zusätzliche Lagerungseinrichtungen für die Arbeitspalette vorzusehen.

Die Funktionssicherheit des Arbeitspaletten-Transports erhöht sich um ein Weiteres durch eine an der Paletten-Auflage vorgesehene Führungsvorrichtung (Anspruch 9), mittels derer die Arbeitspalette bei der Transportbewegung wenigstens teilweise geführt wird. Außerdem vereinfacht sich die Handhabung der maschinellen Werkstückbearbeitungsanlage durch die Führung der Arbeitspalette bei der Transportbewegung.

Gemäß Anspruch 10 ergibt sich die zusätzliche Führungsfunktion der Paletten-Auflage durch besonders einfache Mittel, indem eine Führungsvorrichtung für die Arbeitspalette durch an Tragprofilen der Paletten-Auflage vorgesehene Führungselemente gebildet ist. Vorteilhafterweise fluchten die Führungselemente auf den Tragprofilen in Transportrichtung der Arbeitspalette mit Führungselementen im Arbeitsbereich, wenn die Paletten-Auflage in der Lagerstellung angeordnet ist.

Die Erfindungsbauarten nach den Ansprüchen 11 und 12 zeichnen sich durch eine gute Zugänglichkeit eines Werkstückes aus, welches auf einer aus dem Arbeitsbereich transportierten Arbeitspalette lagert.

Insbesondere ist die Zugänglichkeit an der dem Arbeitsbereich zugewandten Seite der Arbeitspalette in besonderem Maße gewährleistet.

Nachstehend wird die Erfindung anhand beispielhafter schematischer Darstellungen näher erläutert. Es zeigen:
- Figur 1:: eine Laserbearbeitungsanlage mit einer Paletten-Auflage, welche in einer Lagerstellung angeordnet ist,
- Figur 2:: die Laserbearbeitungsanlage aus Figur 1, wenn die Paletten-Auflage in einer zweiten Stellung angeordnet ist und
- Figur 3:: die Laserbearbeitungsanlage aus Figur 1, wenn eine Arbeitspalette auf der Paletten-Auflage lagert.

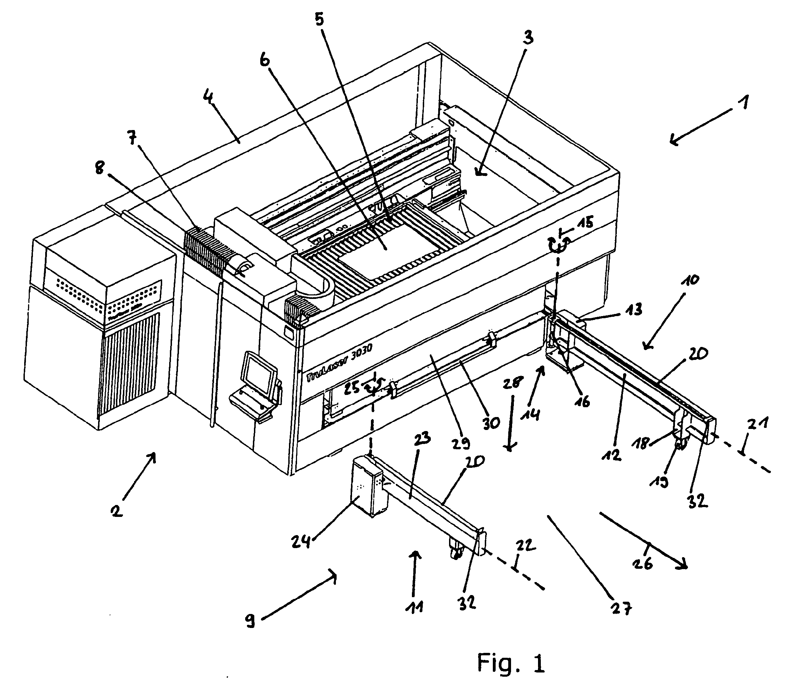

Figur 1 zeigt eine maschinelle Werkstückbearbeitungsanlage in Form einer Laserbearbeitungsanlage 1, welche eine Laserschneidmaschine 2 zum Laserschneiden von Blechen aufweist. Ein Arbeitsbereich 3 der Laserschneidmaschine 2 ist von einer Einhausung 4 umgeben. Im Arbeitsbereich 3 der Laserschneidmaschine 2 ist eine Arbeitspalette 5 angeordnet, auf der ein Werkstück in Form einer Blechtafel 6 lagerbar ist. Eine auf der Arbeitspalette 5 lagernde Blechtafel 6 kann mittels eines Schneidlaserstrahls bearbeitet werden, welcher von einem über der Blechtafel 6 an einem Führungssystem 7 verfahrbaren Laserschneidkopf 8 bereitgestellt wird. Mittels des Laserschneidstrahls können unterschiedlichste Blechausschnitte von der Blechtafel 6 freigeschnitten werden.

Neben der Laserschneidmaschine 2 und außerhalb des Arbeitsbereiches 3 der Laserschneidmaschine 2 ist eine Paletten-Auflage 9 angeordnet. Die Paletten-Auflage 9 umfasst zwei Tragarmanordnungen 10 und 11.

Die Tragarmanordnung 10 weist einen durch ein Tragprofil gebildeten Tragarm 12 auf, der an einer Säule 13 mittels eines Drehlagers 14 um eine vertikale Schwenkachse 15 schwenkbar gelagert ist. Das Drehlager 14 ist von einer tragarmseitigen Welle 16 gebildet, welche an beiden Enden in Lagerbuchsen in Form von Bundbuchsen aus Bronze drehbar aufgenommenen ist. Ein Spiel zwischen der oberen Lagerbuchse und der Welle verhindert ein Blockieren des Drehlagers 14 bei einer Schwenkbewegung. Ein Bewegungsdämpfer (nicht gezeigt) drosselt die Schwenkbewegung des Tragarms 12.

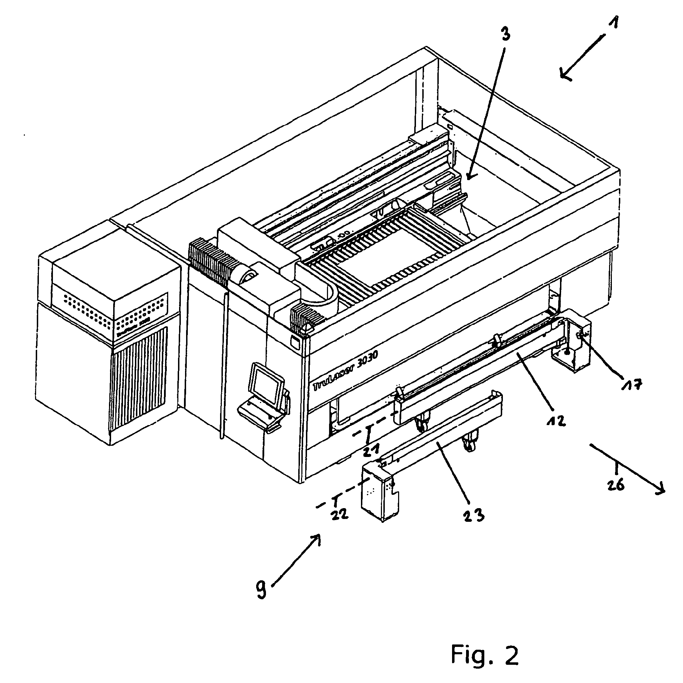

Die Säule 13 ist fest mit dem Boden verschraubt. Eine lösbare Rastverbindung 17 (Figur 2) ist vorgesehen, um den Tragarm 12 in der Schwenkstellung gemäß Figur 1 zu halten.

An dem von der Säule 13 abgewandten Ende des Tragarms 12 ist eine Stütze 18 vorgesehen, welche bodenseitig eine Rolle 19 aufweist. Der Abstand zwischen der Rolle 19 und dem Tragarm 12 ist einstellbar, um auch bei Bodenunebenheiten eine Abstützung des Tragarms 12 über die Stütze 18 auf dem Boden zu gewährleisten.

Auf der Oberseite des Tragarms 12 ist ein Führungselement in Form einer Führungsschiene 20 vorgesehen, welche entlang der Längsachse 21 des Tragarms 12 verläuft.

Der Aufbau der Tragarmanordnung 11 stimmt mit dem Aufbau der Tragarmanordnung 10 weitgehend überein. Insbesondere weist die Tragarmanordnung ebenfalls einen durch ein entlang einer Längsachse 22 verlaufendes Tragprofil gebildeten Tragarm 23 auf, welcher an einer feststehenden Säule 24 um eine vertikale Schwenkachse 25 schwenkbar gelagert ist. Unterschiede beim Aufbau der Tragarmanordnungen 10 und 11 bestehen lediglich in Bezug auf die Länge der Tragarme 12 und 23. Außerdem ist die Tragarmanordnung 11 spiegelbildlich zur Tragarmanordnung 10 aufgebaut.

Figur 1 ist zu entnehmen, dass die Säule 13 der Tragarmanordnung 10 in unmittelbarer Nähe der Einhausung 4 angeordnet ist. Dahingegen ist die Säule 24 der Tragarmanordnung 11 von der Einhausung 4 in einer Transportrichtung 26 beabstandet. Diese Beabstandung bedingt, dass die Tragarme 12 und 13 nicht gleich lang sind, wie es generell möglich wäre, sondern unterschiedlich lang.

In dem Zustand der Laserbearbeitungsanlage 1 gemäß Figur 1 ist die Paletten-Auflage 9 in ihrer Lagerstellung angeordnet. Die Tragarme 12 und 23 sind parallel zueinander angeordnet. Ihre Längsachsen 21 und 22 verlaufen parallel zu der Transportrichtung 26. Zwischen den Tragarmanordnungen 10 und 11 ist ein begehbarer Freiraum 27 ausgebildet, durch welchen z. B. ein Bediener ungehindert zum Arbeitsbereich 3 gelangen kann. Die Paletten-Auflage 9 steht gegenüber dem Arbeitsbereich 3 in Transportrichtung 26 relativ weit vor. Die Oberseiten der Tragarme 12 und 23 definieren eine horizontale Lagerfläche 28 zur Lagerung einer Arbeitspalette 5.

Ausgehend von der in Figur 1 gezeigten Lagerstellung ist die Paletten-Auflage 9 in eine zweite Stellung (Figur 2) überführbar. Zu diesem Zweck wird nach Lösen der Rastverbindung 17 zuerst der Tragarm 12 von einem Bediener um einen Winkel 90° in eine Stellung geschwenkt, in welcher seine Längsachse 21 quer zur Transportrichtung 26 verläuft. Bei der Überführungs-Schwenkbewegung des Tragarms 12 bewegt sich das von der Säule 13 abliegende Ende des Tragarms 12 auf den Arbeitsbereich 3 zu, wobei sich der Tragarm 12 bei der Schwenkbewegung über die Rolle 19 auf dem Boden abgestützt. Die von der Paletten-Auflage 9 definierte Lagerfläche 28 verkleinert sich.

Anschließend wird der Tragarm 23 in analoger Weise aber in entgegengesetzter Drehrichtung geschwenkt. Nach Abschluss der Schwenkbewegung verläuft die Längsachse 22 des Tragarms 23 wie die Längsachse 21 des Tragarms 12 quer zur Transportrichtung 26.

Die Paletten-Auflage 9 ist nun in der in Figur 2 dargestellten platzsparenden Stellung angeordnet. Die Tragarme 12 und 23 sind quer zur Transportrichtung 26 und entlang einer Seitenwand der Einhausung 4 teilweise gegenseitig überdeckend angeordnet. Die Paletten-Auflage 9 steht in Transportrichtung 26 wesentlich weniger weit gegenüber dem Arbeitsbereich 3 vor als in der Lagerstellung.

Die Paletten-Auflage 9 kann in entsprechender Weise wieder in die Lagerstellung zurückgeschwenkt werden.

Im Folgenden wird die Vorgehensweise beim Transport der Arbeitspalette 5 aus dem Arbeitsbereich 3 der Laserschneidmaschine 2 beschrieben.

Zuerst muss die Paletten-Auflage 9 in ihrer Lagerstellung (Figur 1) angeordnet sein. Ein vor der Laserschneidmaschine 2 stehender Bediener öffnet einen mit einer Klappe 29 verschlossenen Durchlass der Einhausung 4. Zu diesem Zweck ist die Klappe 29 mittels eines Handgriffs 30 nach oben schwenkbar. Nun kann der Bediener durch den Durchlass die Arbeitspalette 5 ergreifen und in Transportrichtung 26 aus dem Arbeitsbereich 3 ziehen. Im Falle einer nicht gezeigten Variante kann die Transportbewegung der Arbeitspalette 5 auch mittels einer Antriebseinrichtung erzeugt werden.

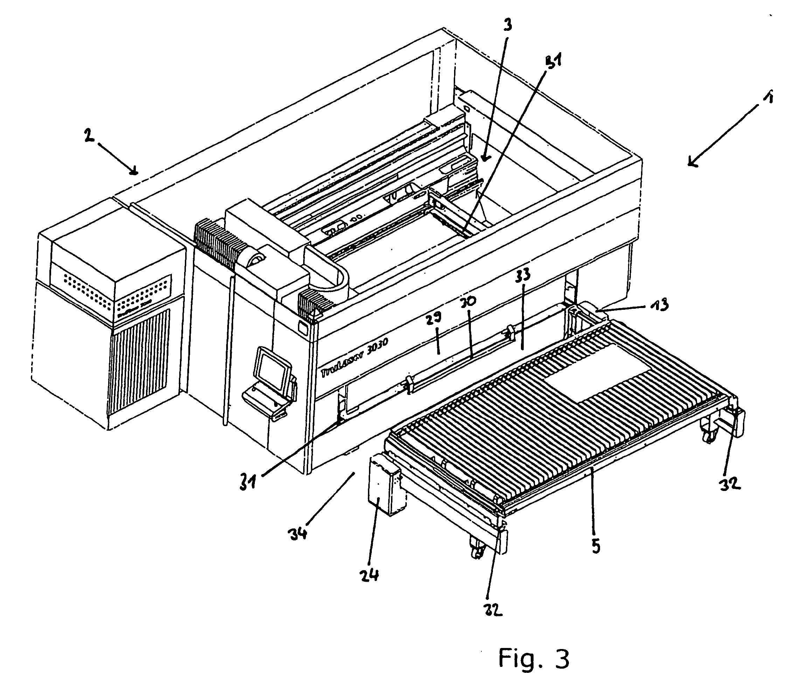

Zu Beginn der Transportbewegung verfährt die Arbeitspalette 5 auf Führungsschienen 31 (Figur 3, teilweise verdeckt), welche im Arbeitsbereich 3 angeordnet sind. Die Führungsschienen 31 fluchten in Transportrichtung 26 mit den an den Tragarmen 12 und 23 vorgesehenen Führungsschienen 20. Wenn die Arbeitspalette 5 aus dem Arbeitsbereich 3 bzw. aus der Einhausung 4 in Transportrichtung 26 austritt, lagert sie zuerst nur auf der Tragarmanordnung 10. Bei fortgesetzter Verfahrbewegung der Arbeitspalette 5 in Transportrichtung lagert die Arbeitspalette 5 dann auch auf der Tragarmanordnung 11. Auf ihrer Unterseite weist die Arbeitspalette 5 Führungswagen auf, welche sowohl mit den tragarmseitigen Führungsschienen 20 als auch mit den maschinenseitigen Führungsschienen 31 zur Führung der Arbeitspalette 5 bei der Transportbewegung zusammenwirken. Die Transportbewegung ist beendet, wenn die Arbeitspalette 5 an Anschlägen 32 anliegt, welche an den arbeitsbereichsfernen Enden der Tragarme 12 und 23 vorgesehen sind.

Figur 3 zeigt die Verhältnisse, wenn die Arbeitspalette 5 vollständig aus dem Arbeitsbereich 3 auf die Paletten-Auflage 9 verschoben ist. Zwischen der Arbeitspalette 5 und der Einhausung 4 des Arbeitsbereiches 3 ist ein Freiraum 33 ausgebildet, in welchem außer der Säule 13 der Tragarmanordnung 10 keine Teile der Paletten-Auflage 9 angeordnet sind. Da die Säule 24 der Tragarmanordnung 11 in Transportrichtung 26 von der Einhausung 4 beabstandet ist, weist der Zwischenraum 33 einen seitlichen Durchgang 34 auf. Ein Bediener kann durch den Durchgang 34 in den Zwischenraum 33 gelangen, um die z. B. freigeschnittenen Blechausschnitte von der Arbeitspalette 5 zu nehmen.

Alternativ ist es denkbar, dass die Säule 13 auch von der Einhausung 4 beabstandet ist und folglich der Zwischenraum 33 an beiden Querseiten einen Durchgang aufweist. Vorteilhaft an der in den Figuren gezeigten Variante ist, dass die Arbeitspalette 5 bei der Transportbewegung zunächst von den im Arbeitsbereich 3 vorgesehenen Führungsschienen 31 und dann weitgehend übergangslos auch von der Führungsschiene 20 an der Tragarmanordnung 10 gelagert und geführt wird.

Nachdem z. B. die Blechausschnitte von der Arbeitspalette 5 entnommen wurden und die Arbeitspalette 5 mit einer Rohblechtafel 6 beschickt wurde, kann die Arbeitspalette 5 wieder in den Arbeitsbereich 3 entgegen der Transportrichtung 26 zurückgeschoben werden.

## Patentansprüche

1. Maschinelle Werkstückbearbeitungsanlage, insbesondere Laserbearbeitungsanlage, welche einen Arbeitsbereich (3) aufweist, innerhalb dessen ein auf einer Arbeitspalette (5) gelagertes Werkstück (6) bearbeitbar ist, wobei die Arbeitspalette (5) in einer Transportrichtung (26) von einer Position innerhalb des Arbeitsbereiches (3) in eine Position außerhalb des Arbeitsbereiches (3) und/oder entgegengesetzt transportierbar ist, und wobei eine Paletten-Auflage (9) vorgesehen ist, welche eine Lagerfläche (28) zur Lagerung der Arbeitspalette (5) definiert, wobei die von der Paletten-Auflage (9) definierte Lagerfläche in einer Lagerstellung der Paletten-Auflage (9) außerhalb des Arbeitsbereiches (3) angeordnet ist und wobei die Paletten-Auflage (9) in eine zweite Stellung überführbar ist, in welcher die Paletten-Auflage (9) in Transportrichtung (26) weniger weit gegenüber dem Arbeitsbereich (3) vorsteht als in der Lagerstellung,
**dadurch gekennzeichnet, dass**
die Paletten-Auflage (9) ausgehend von der Lagerstellung in die zweite Stellung überführbar ist, indem durch Zusammenschieben, Zusammenschwenken oder Zusammenklappen der Paletten-Auflage (9) wenigstens ein Teil der Paletten-Auflage (9) unter Verkleinerung der durch die Paletten-Auflage (9) definierten Lagerfläche (28) auf den Arbeitsbereich (3) zu bewegbar ist.

2. Maschinelle Werkstückbearbeitungsanlage nach Anspruch 1, **dadurch gekennzeichnet, dass** die Paletten-Auflage (9) wenigstens ein Lager (14) aufweist, welches einen zum Überführen der Paletten-Auflage (9) in die verschiedenen Stellungen bewegbaren Teil der Paletten-Auflage (9) beweglich lagert.

3. Maschinelle Werkstückbearbeitungsanlage nach einem der vorhergehenden Ansprüche, **dadurch gekennzeichnet, dass** die Paletten-Auflage (9) ausgehend von der Lagerstellung in die zweite Stellung überführbar ist, indem wenigstens ein Teil der Paletten-Auflage (9) auf den Arbeitsbereich (3) zu schwenkbar ist, insbesondere um eine vertikale Schwenkachse (15, 25).

4. Maschinelle Werkstückbearbeitungsanlage nach einem der vorhergehenden Ansprüche, **dadurch gekennzeichnet, dass** die Paletten-Auflage wenigstens ein Tragprofil aufweist, dessen Längsachse (21, 22) in der Lagerstellung der Paletten-Auflage (9) entlang der Transportrichtung (26) verläuft und dass wenigstens ein Ende des Tragprofils, welches in der Lagerstellung der Paletten-Auflage (9) arbeitsbereichsfern angeordnet ist, auf den Arbeitsbereich (3) zu bewegbar ist, insbesondere schwenkbar ist.

5. Maschinelle Werkstückbearbeitungsanlage nach einem der vorhergehenden Ansprüche, **dadurch gekennzeichnet, dass** die Paletten-Auflage (9) wenigstens zwei Tragprofile aufweist, welche zum Überführen der Paletten-Auflage (9) in die verschiedenen Stellungen relativ zu dem Arbeitsbereich (3) um verschiedene, vertikal verlaufende Schwenkachsen (15, 25) schwenkbar sind.

6. Maschinelle Werkstückbearbeitungsanlage nach einem der vorhergehenden Ansprüche, **dadurch gekennzeichnet, dass** die Längsachse (21, 22) wenigstens eines Tragprofils der Paletten-Auflage (9) in der zweiten Stellung der Paletten-Auflage (9) weitgehend quer zur Transportrichtung (26) verläuft.

7. Maschinelle Werkstückbearbeitungsanlage nach einem der vorhergehenden Ansprüche, **dadurch gekennzeichnet, dass** sich Tragprofile der Paletten-Auflage (9) in der zweiten Stellung der Paletten-Auflage (9) quer zur Transportrichtung (26) wenigstens teilweise gegenseitig überdecken.

8. Maschinelle Werkstückbearbeitungsanlage nach einem der vorhergehenden Ansprüche, **dadurch gekennzeichnet, dass** die Arbeitspalette (5) bei der Transportbewegung wenigstens teilweise auf der Paletten-Auflage (9) lagert.

9. Maschinelle Werkstückbearbeitungsanlage nach einem der vorhergehenden Ansprüche, **dadurch gekennzeichnet, dass** die Paletten-Auflage (9) eine Führungsvorrichtung aufweist, welche die Arbeitspalette (5) wenigstens teilweise bei der Transportbewegung führt.

10. Maschinelle Werkstückbearbeitungsanlage nach einem der vorhergehenden Ansprüche, **dadurch gekennzeichnet, dass** eine Führungsvorrichtung für die Arbeitspalette (5) durch an Tragprofilen der Paletten-Auflage (9) vorgesehene Führungselemente (20) gebildet ist.

11. Maschinelle Werkstückbearbeitungsanlage nach einem der vorhergehenden Ansprüche, **dadurch gekennzeichnet, dass** die Arbeitspalette (5) auf der Paletten-Auflage (9) in einer Lage anordenbar ist, in welcher sich zwischen der Arbeitspalette (5) und dem Arbeitsbereich (3) ein Freiraum (33) ausbildet.

12. Maschinelle Werkstückbearbeitungsanlage nach Anspruch 11, **dadurch gekennzeichnet, dass** der Freiraum (33) über wenigstens einen zwischen dem Arbeitsbereich (3) und der Paletten-Auflage (9) ausgebildeten Durchgang (34) zugänglich ist.

## Claims

1. Mechanical workpiece processing system, in particular a laser processing system, which has an operating range (3), within which a workpiece (6) which is supported on an operating pallet (5) can be processed, the operating pallet (5) being able to be transported in a transport direction (26) from a position within the operating range (3) into a position outside the operating range (3) and/or in the opposing direction, and there being provided a pallet support (9) which defines a storage area (28) for storing the operating pallet (5), the storage area defined by the pallet support (9) being arranged outside the operating range (3) in a storage position of the pallet support (9) and the pallet support (9) being able to be moved into a second position, in which the pallet support (9) protrudes in the transport direction (26) to a lesser extent with respect to the operating range (3) than in the storage position,
**characterised in that**
the pallet support (9) can be moved from the storage position into the second position **in that**, by pushing together, pivoting together or folding together the pallet support (9), at least a portion of the pallet support (9) can be moved in the direction towards the operating range (3), with the storage area (28) defined by the pallet support (9) being reduced.

2. Mechanical workpiece processing system according to claim 1, **characterised in that** the pallet support (9) has at least one bearing (14), which movably supports a portion of the pallet support (9) which can be moved to transfer the pallet support (9) into the various positions.

3. Mechanical workpiece processing system according to either of the preceding claims, **characterised in that** the pallet support (9) can be moved from the storage position into the second position by at least a portion of the pallet support (9) being able to be pivoted towards the operating range (3), in particular about a vertical pivot axis (15, 25).

4. Mechanical workpiece processing system according to any one of the preceding claims, **characterised in that** the pallet support has at least one carrier profile-member, whose longitudinal axis (21, 22) extends in the transport direction (26) in the storage position of the pallet support (9) and **in that** at least one end of the carrier profile-member which is arranged remote from the operating range in the storage position of the pallet support (9) can be moved, in particular can be pivoted, towards the operating range (3).

5. Mechanical workpiece processing system according to any one of the preceding claims, **characterised in that** the pallet support (9) has at least two carrier profile-members which can be pivoted relative to the operating range (3) about various vertically extending pivot axes (15, 25) in order to transfer the pallet support (9) into the various positions.

6. Mechanical workpiece processing system according to any one of the preceding claims, **characterised in that** the longitudinal axis (21, 22) of at least one carrier profile-member of the pallet support (9) extends in the second position of the pallet support (9) substantially transversely relative to the transport direction (26).

7. Mechanical workpiece processing system according to any one of the preceding claims, **characterised in that** carrier profile-members of the pallet support (9) at least partially overlap each other transversely relative to the transport direction (26) in the second position of the pallet support (9).

8. Mechanical workpiece processing system according to any one of the preceding claims, **characterised in that** the operating pallet (5) is at least partially supported on the pallet support (9) during the transport movement.

9. Mechanical workpiece processing system according to any one of the preceding claims, **characterised in that** the pallet support (9) has a guiding device which guides the operating pallet (5) at least partially during the transport movement.

10. Mechanical workpiece processing system according to any one of the preceding claims, **characterised in that** a guiding device for the operating pallet (5) is formed by guiding elements (20) provided on carrier profile-members of the pallet support (9).

11. Mechanical workpiece processing system according to any one of the preceding claims, **characterised in that** the operating pallet (5) can be arranged on the pallet support (9) in a position in which a free space (33) is formed between the operating pallet (5) and the operating range (3).

12. Mechanical workpiece processing system according to claim 11, **characterised in that** the free space (33) is accessible via at least one passage way (34) which is formed between the operating range (3) and the pallet support (9).

## Revendications

1. Installation automatique d'usinage de pièces, en particulier installation d'usinage au laser comportant une zone de travail (3) à l'intérieur de laquelle peut être usinée une pièce (6) reposant sur une palette de travail (5), sachant que ladite palette de travail (5) peut être convoyée, dans une direction de transport (26), d'un emplacement situé à l'intérieur de la zone de travail (3) à un emplacement situé à l'extérieur de ladite zone de travail (3), et/ou en sens inverse, et sachant qu'il est prévu un support (9) de palette qui définit une surface de stockage (28) dévolue au stockage de la palette de travail (5), ladite surface de stockage, définie par le support (9) de la palette, étant située à l'extérieur de la zone de travail (3) dans une position de stockage dudit support (9) de la palette, et le support (9) de la palette pouvant être transféré à une seconde position dans laquelle, dans la direction de transport (26), ledit support (9) de la palette déborde moins loin vis-à-vis de ladite zone de travail (3) que dans ladite position de stockage,
**caractérisée par le fait que**
le support (9) de la palette peut être transféré à la seconde position à partir de la position de stockage en ce sens que, suite à un regroupement dudit support (9) de la palette par coulissement, par pivotement ou par rabat, au moins une partie dudit support (9) de la palette peut être animée d'un mouvement en direction de la zone de travail (3), en impliquant une diminution de la surface de stockage (28) définie par ledit support (9) de la palette.

2. Installation automatique d'usinage de pièces, selon la revendication 1, **caractérisée par le fait que** le support (9) de la palette comporte au moins un palier (14) assurant le montage mobile d'une partie dudit support (9) de la palette, à laquelle des mouvements peuvent être imprimés en vue de transférer ledit support (9) de la palette aux différentes positions.

3. Installation automatique d'usinage de pièces, selon l'une des revendications précédentes, **caractérisée par le fait que** le support (9) de la palette peut être transféré à la seconde position, à partir de la position de stockage, en ce sens qu'au moins une partie dudit support (9) de la palette peut être animée de pivotements en direction de la zone de travail (3), en particulier autour d'un axe vertical de pivotement (15,25).

4. Installation automatique d'usinage de pièces, selon l'une des revendications précédentes, **caractérisée par le fait que** le support de la palette présente au moins un profilé de support dont l'axe longitudinal (21, 22) s'étend le long de la direction de transport (26) dans la position de stockage dudit support (9) de la palette ; et **par le fait qu'**au moins une extrémité dudit profilé de support, qui occupe dans la position de stockage dudit support (9) de la palette une position éloignée de la zone de travail, peut être animée de mouvements, en particulier de pivotements en direction de ladite zone de travail (3).

5. Installation automatique d'usinage de pièces, selon l'une des revendications précédentes, **caractérisée par le fait que** le support (9) de la palette comprend au moins deux profilés de support pouvant être animés de pivotements vis-à-vis de la zone de travail (3), autour de différents axes de pivotement (15, 25) s'étendant verticalement, en vue de transférer ledit support (9) de la palette aux différentes positions.

6. Installation automatique d'usinage de pièces, selon l'une des revendications précédentes, **caractérisée par le fait que**, dans la seconde position du support (9) de la palette, l'axe longitudinal (21, 22) d'au moins un profilé de support dudit support (9) de la palette s'étend, en grande partie, dans le sens transversal vis-à-vis de la direction de transport (26).

7. Installation automatique d'usinage de pièces, selon l'une des revendications précédentes, **caractérisée par le fait que**, dans la seconde position du support (9) de la palette, des profilés de support dudit support (9) de la palette se recouvrent réciproquement, au moins en partie, dans le sens transversal vis-à-vis de la direction de transport (26).

8. Installation automatique d'usinage de pièces, selon l'une des revendications précédentes, **caractérisée par le fait que** la palette de travail (5) repose, au moins en partie, sur le support (9) de la palette au cours du mouvement de transport.

9. Installation automatique d'usinage de pièces, selon l'une des revendications précédentes, **caractérisée par le fait que** le support (9) de la palette est doté d'un dispositif de guidage qui guide ladite palette de travail (5), au moins en partie, au cours du mouvement de transport.

10. Installation automatique d'usinage de pièces, selon l'une des revendications précédentes, **caractérisée par le fait qu'**un dispositif de guidage, assigné à la palette de travail (5), est formé par des éléments de guidage (20) prévus sur des profilés de support du support (9) de la palette.

11. Installation automatique d'usinage de pièces, selon l'une des revendications précédentes, **caractérisée par le fait que** la palette de travail (5) peut être placée, sur le support (9) de la palette, dans une position dans laquelle un espace libre (33) se forme entre ladite palette de travail (5) et la zone de travail (3).

12. Installation automatique d'usinage de pièces, selon la revendication 11, **caractérisée par le fait que** l'espace libre (33) est accessible par l'intermédiaire d'au moins un passage (34) réservé entre la zone de travail (3) et le support (9) de la palette.
